# DEMANDE DE BREVET EUROPEEN

(11) **EP 1 333 512 A1**
(43) Date de publication de la demande: **06.08.2003**
(21) Numéro de dépôt: 03290119.1
(22) Date de dépôt: 17.01.2003
(51) Int. Cl.: H01M 4/38, H01M 4/24

(54) **Matière électrochimiquement active pour électrode négative de générateur électrochimique secondaire à électrolyte alcalin**

(30) Priorité: 31.01.2002 FR 0201141
(71) Demandeur: ALCATEL, 75008 Paris (FR)
(72) Inventeur: Bernard, Patrick, 33000 Bordeaux (FR); Goubault, Lionel, 33700 Merignac (FR); Le Guenne, Laure, 33520 Bruges (FR)
(74) Mandataire: Sciaux, Edmond

(57) **Abrégé**

La présente invention a pour objet une matière électrochimiquement active comprenant un alliage hydrurable dont la surface est recouverte d'une couche protectrice constituée principalement d'un hydroxyde de nickel. De préférence la couche est constituée d'au moins 80% en poids d'hydroxyde de nickel et comporte jusqu'à 20% en poids d'au moins un autre métal qui peut être choisi parmi Mn, Al, Co, Cr, Fe et Cu. De préférence encore la couche représente de 1% à 4% en poids de l'alliage hydrurable.

## Description

La présente invention se rapporte à une matière électrochimiquement active pour électrode négative de générateur électrochimique secondaire. Elle s'étend en outre au procédé de fabrication de cette matière active, et à son utilisation dans une électrode négative de générateur électrochimique secondaire à électrolyte alcalin.

Les électrodes négatives, dites de type empâté, utilisées industriellement dans les générateurs électrochimiques secondaires nickel-métal hydrurable (Ni-MH), comportent un support conducteur et une pâte comprenant un alliage métallique capable d'absorber l'hydrogène pour former un hydrure puis de le libérer de manière réversible. Ces alliages sont composés par exemple de Misch metal, qui est un mélange de terres rares, et d'éléments de transition (Ni, Co, Mn, Fe, etc...).

Au contact de l'air, ces alliages hydrurables s'oxydent spontanément et leur surface se recouvre d'un film d'oxyde qui freine l'absorption de l'hydrogène. Il en résulte une capacité réduite et l'augmentation de la pression interne du générateur. Pour restituer à l'alliage son activité initiale, il a été proposé différents traitements d'activation dans le but d'éliminer ce film d'oxyde, et si possible d'éviter qu'il ne se reforme.

Le document EP-0 696 823 rapporte qu'un traitement par une solution alcaline à température élevée conduit à la formation d'aiguilles d'hydroxyde de terres rares qui peuvent ensuite être éliminées par ultrasons. La présence de ces aiguilles entraîne une diminution de la conductivité et un raccourcissement de la durée de vie du générateur. A la surface d'un alliage contenant des métaux de transition des groupes Vlla, VIII ou Ib de la classification périodique, ce document propose d'enrichir la couche superficielle en métaux de transition. Cette couche est obtenue par élution des terres rares à la surface de l'alliage avec une solution aqueuse acide de pH compris entre 2 et 6.

Le document EP-0 645 833 mentionne des traitements par l'eau chaude (> 60°C) ou une solution alcaline afin de former une couche à base de nickel sur la surface de l'alliage. Cependant ces traitements ont l'inconvénient de favoriser la formation d'hydroxyde. L'hydroxyde augmente la résistance de contact entre les particules d'alliage hydrurable ou diminue l'activité de l'alliage, ce qui entraîne une baisse des performances en décharge rapide et à basse température. Ce document propose donc un traitement acide de la surface de l'alliage. Un traitement acide a aussi pour effet de dissoudre superficiellement l'alliage en dégageant de l'hydrogène. Or cet hydrogène est immédiatement réabsorbé, provoquant des fissures à la surface de l'alliage. Pour éviter ce phénomène, il est conseillé d'utiliser une solution aqueuse acide dont le pH est maintenu entre 0,5 et 3,5.

Le document EP-0 945 907 estime que le traitement acide conventionnel n'empêche pas la réoxydation de l'alliage au cours de la fabrication du générateur. Il en résulte une montée de la pression interne en charge dans le générateur étanche, une faible capacité, et de mauvaises performances en décharge rapide et à basse température. Ce document propose de traiter l'alliage par une solution acide de pH compris entre 0,5 et 3 selon plusieurs modes de réalisation. Notamment, une solution acide contenant des ions métalliques comme Ni ou Co permet de former une couche métallique en surface. Dès que le pH atteint 4, on peut ajouter dans la solution acide une solution alcaline de telle sorte que le pH s'élève rapidement jusqu'à 5. La température de la solution est de préférence d'au moins 65°C. Les terres rares dissoutes dans la solution au cours de l'attaque acide se déposent alors sous forme d'hydroxyde à la surface de l'alliage. Le type de couche formée dépend du pH initial de la solution de traitement. En particulier si le pH est trop élevé, la couche formée sera trop fine et trop fragile pour assurer une protection suffisante contre l'oxydation.

Le facteur limitant la durée de vie des générateurs secondaires nickel-métal hydrurable Ni-MH est l'assèchement du séparateur, conséquence directe de la corrosion de l'alliage hydrurable en milieu alcalin. En effet, la consommation d'eau due à la réaction de corrosion de l'alliage entraîne un assèchement du séparateur, responsable de l'augmentation de la résistance interne du générateur étanche, et donc de la baisse de la puissance électrochimique. Cette corrosion entraîne également une diminution de la capacité de la matière active par transformation d'une partie de l'alliage électrochimiquement actif en hydroxydes et hydrures.

Le but de la présente invention est de proposer un générateur électrochimique secondaire, comportant une électrode négative dont la matière active comprend un alliage hydrurable, qui a une durée de vie augmentée par rapport aux générateurs connus. L'invention a aussi pour but de proposer une matière électrochimiquement active comprenant un alliage hydrurable qui présente un taux de corrosion en fonctionnement réduit par rapport aux matières actives de l'art antérieur. L'invention a encore pour but de proposer un procédé de fabrication d'une telle matière active qui soit plus simple à mettre en oeuvre que les procédés connus.

La présente invention a pour objet une matière électrochimiquement active comprenant un alliage hydrurable dont la surface est recouverte d'une couche protectrice, caractérisée en ce que ladite couche est constituée principalement d'un hydroxyde de nickel.

De préférence la couche est constituée d'au moins 80% en poids d'hydroxyde de nickel. La couche peut comporter jusqu'à 20% en poids d'au moins un autre métal. Ce métal est notamment choisi parmi Mn, Al, Co, Cr, Fe ou Cu.

De préférence la couche représente de 1% à 4% en poids de l'alliage hydrurable. De préférence encore la couche représente 2 à 4% en poids de l'alliage hydrurable dans son état initial lorsqu'il est utilisé sans traitement préalable, et de 1 à 3% en poids de l'alliage hydrurable après élimination de la couche d'oxyde par un traitement préalable. Ce traitement peut consister par exemple en une attaque modérée par une solution acide.

L' alliage hydrurable MH est choisi parmi les alliages hydrurables de type AB₅ dans lequel A représente un mischmetal Mm, qui est un mélange de terres rares comprenant notamment La, Ce, Pr , Nd et Y, et dans lequel B représente au moins un élément choisi parmi Ni, Mn, Al, Co, Cr, Fe, Cu, B, Si, S, Cr, Ga, Ge, Mo, Ru, Rh, Pd, Ag, In, Sn, Sb, Bi, P, V, Nb, Ta et W.

L'invention a aussi pour objet une électrode négative de générateur électrochimique secondaire à électrolyte alcalin contenant la matière électrochimiquement active précédemment décrite. L'électrode comprend un support conducteur et une couche contenant la matière active et un liant. Le liant est choisi de préférence parmi un copolymère styrène / butadiène et un copolymère styrène / acrylate. Le support conducteur peut être un support bidimensionnel, comme un feuillard plein ou perforé, un métal déployé, une grille ou un tissu, ou bien encore un support tridimensionnel, comme une mousse ou un feutre. Ce support est recouvert d'une couche contenant la matière électrochimiquement active, un liant et le plus souvent un matériau conducteur. La couche active peut aussi comporter en faibles quantités des additifs destinés à faciliter la mise en forme de l'électrode, comme un épaississant ou un stabilisateur de texture.

L'invention a encore pour objet un générateur électrochimique secondaire comportant une électrode négative contenant la matière électrochimiquement active précédemment décrite. Le générateur contient en outre une électrode positive dont la matière électrochimiquement active est un hydroxyde à base de nickel, un séparateur polymère et un électrolyte aqueux alcalin. L'électrode positive peut être de type fritté ou comporter un support en mousse. Elle peut contenir un hydroxyde à base de nickel partiellement substitué par Co et/ou Zn, un composé du cobalt sous forme de revêtement conducteur et éventuellement un composé de l'yttrium comme Y₂O₃. Les deux électrodes sont séparées par un séparateur de polyamide ou de polyoléfine, éventuellement traité par l'acide acrylique ou une polysulfone.

L'invention a encore pour objet un procédé de fabrication de la matière électrochimiquement active précédemment décrite comprenant les étapes suivantes :
- on met en suspension de la poudre d'alliage hydrurable dans l'eau,
- on ajoute à la suspension une solution aqueuse d'un sel de nickel,
- puis on ajoute une solution alcaline de manière à amener le pH à une valeur au moins égale à 7,
- on laisse la poudre au contact de la solution alcaline,
- on sépare, on lave et on sèche la poudre de matière active obtenue.

La température de traitement en présence de la solution alcaline est inférieure à 100°C, et de préférence inférieure à 40°C. On opérera avantageusement à température ambiante pour des raisons de commodité et de coût. Le sel de nickel utilisé est de préférence un sel de nickel (II) comme par exemple un acétate, un sulfate, un nitrate ou un chlorure de nickel. La solution alcaline peut être une solution de soude NaOH, de lithine LiOH ou de potasse KOH. La poudre est laissée en contact avec la solution alcaline pendant une durée qui ne dépasse pas 24 heures, et de préférence comprise entre 0 et 7 heures.

Pour les générateurs secondaires nickel-métal hydrurable Ni-MH destinés aux applications de puissance ou destinés à fonctionner à basse température, un traitement acide préalable peut être effectué sur l'alliage hydrurable afin d'éliminer la couche d'oxyde superficielle et d'augmenter les performances. Ce traitement entraîne malheureusement une augmentation de la surface de l'alliage et par conséquent une augmentation de son niveau de corrosion. Il est donc d'autant plus indispensable de disposer d'un procédé conduisant à une moindre corrosion de l'alliage hydrurable.

Selon une variante, le procédé de fabrication de la matière électrochimiquement active précédemment décrite comprenant les étapes suivantes :
- on met en suspension de la poudre d'alliage hydrurable dans une solution aqueuse acide afin d'éliminer la couche d'oxyde,
- on filtre, on lave et on met en suspension dans l'eau la poudre d'alliage hydrurable désoxydée
- on ajoute à la suspension une solution aqueuse d'un sel de nickel,
- puis on ajoute une solution alcaline de manière à amener le pH à une valeur au moins égale à 7,
- on laisse la poudre au contact de la solution alcaline,
- on sépare, on lave et on sèche la poudre de matière active obtenue.

La température de traitement acide est inférieure à 100°C, et de préférence inférieure à 40°C. On opérera avantageusement à température ambiante pour des raisons de commodité et de coût. La solution aqueuse acide a un pH inférieur à 7, et de préférence compris entre 0 et 3. On utilise par exemple une solution d'acide chlorhydrique HCI. Le traitement acide est effectué jusqu'à ce que le pH atteigne la valeur de 3

D'autres caractéristiques et avantages de la présente invention apparaîtront au cours des exemples suivants de réalisation, donnés bien entendu à titre illustratif et non limitatif, et dans le dessin annexé sur lequel
- la figure 1 représente la durée de vie en nombre de cycles N d'un générateur électrochimique comportant une électrode négative contenant une matière active selon l'invention, en fonction de la quantité d'hydroxyde Q déposé en surface en % en poids d'alliage hydrurable,
- la figure 2 est analogue à la figure 1 pour une matière active ayant subit de traitement acide préalable.

### EXEMPLE 1

On fabrique une matière active A en utilisant un alliage hydrurable qui appartient à la famille des AB₅ de composition La_{0.3}Ce_{0.5}Nd_{0.15}Pr_{0.05}Ni_{3.55}Mn_{0.4}Al_{0.3}Co_{0.75}. La matière active est obtenue en précipitant de l'hydroxyde de nickel Ni(OH)₂ sur cet alliage hydrurable pulvérulent. La couche externe d'hydroxyde de nickel ainsi formée représente 1% de la masse d'alliage. La matière active est préparée de la manière suivante.

A une suspension de 150 g de poudre d'alliage hydrurable dans 100 ml d'eau à température ambiante (environ 20°C), sont ajoutés successivement 28,7 ml d'une solution de sulfate de nickel NiSO₄.6H₂O à 150 g/l, puis progressivement une solution d'hydroxyde de soude NaOH (1M) de telle sorte que le pH atteigne la valeur de 11. La poudre est alors laissée sous agitation en contact avec la solution alcaline environ 1 heure. La poudre de matière active obtenue est alors séparée de la solution par filtration, lavée et séchée.

### EXEMPLE 2

On fabrique une matière active B en utilisant un alliage hydrurable qui est le même que dans l'exemple 1. La matière active est obtenue en précipitant de l'hydroxyde de nickel Ni(OH)₂ sur cet alliage hydrurable pulvérulent. La couche externe d'hydroxyde de nickel ainsi formée représente 3% de la masse d'alliage. Le dépôt de la couche d'hydroxyde s'effectue de la manière décrite dans exemple 1 à l'exception du fait que l'on utilise 86 ml d'une solution de sulfate de nickel NiSO₄.6H₂O à 150 g/l.

### EXEMPLE 3

On fabrique une matière active C en utilisant un alliage hydrurable qui est le même que dans l'exemple 1. La matière active est obtenue en précipitant de l'hydroxyde de nickel Ni(OH)₂ sur cet alliage hydrurable pulvérulent. La couche externe d'hydroxyde de nickel ainsi formée représente 6% de la masse d'alliage. Le dépôt de la couche d'hydroxyde s'effectue de la manière décrite dans exemple 1 à l'exception du fait que l'on utilise 172 ml d'une solution de sulfate de nickel NiSO₄.6H₂O à 150 g/l.

### EXEMPLE 4

On fabrique une matière active D en utilisant un alliage hydrurable qui est analogue à celui de l'exemple 1 à l'exception du fait que la couche superficielle d'oxyde a été éliminée par traitement avec une solution aqueuse d'acide chlorhydrique HCI de la manière suivante.

A une suspension de 150 g de poudre d'alliage dans 150 ml d'eau à température ambiante (environ 20°C), sont ajoutés 13 ml d'une solution aqueuse d'acide chlorhydrique HCI de concentration 12 M. Les particules sont maintenues en suspension sous agitation jusqu'à ce que le pH atteigne la valeur de 3. La poudre d'alliage hydrurable désoxydé est alors séparée de la solution, lavée et séchée. Le taux d'attaque résultant représente 3,5% en poids de la masse initiale de l'alliage. Le taux d'attaque est défini par le rapport de la masse d'alliage attaquée sur la masse d'alliage initiale.

La matière active est obtenue en précipitant de l'hydroxyde de nickel Ni(OH)₂ sur cet alliage hydrurable désoxydé pulvérulent. La couche externe d'hydroxyde de nickel ainsi formée représente 0,5% de la masse d'alliage. Le dépôt de la couche d'hydroxyde s'effectue de la manière décrite dans exemple 1 à l'exception du fait que l'on utilise 14,3 ml d'une solution de sulfate de nickel NiSO₄.6H₂O à 150 g/l.

### EXEMPLE 5

On fabrique une matière active E en utilisant un alliage hydrurable qui est analogue à celui de l'exemple 1 à l'exception du fait que la couche superficielle d'oxyde a été éliminée par un traitement par une solution aqueuse d'acide chlorhydrique HCI de la manière décrite dans l'exemple 4. Le taux d'attaque résultant représente 3,5% en poids de la masse de l'alliage.

La matière active est obtenue en précipitant de l'hydroxyde de nickel Ni(OH)₂ sur cet alliage hydrurable désoxydé pulvérulent. La couche externe d'hydroxyde de nickel ainsi formée représente 2% de la masse d'alliage. Le dépôt de la couche d'hydroxyde s'effectue de la manière décrite dans exemple 1 à l'exception du fait que l'on utilise 57,3 ml d'une solution de sulfate de nickel NiSO₄.6H₂O à 150 g/l.

### EXEMPLE 6

On fabrique une matière active F en utilisant un alliage hydrurable qui est analogue à celui de l'exemple 1 à l'exception du fait que la couche superficielle d'oxyde a été éliminée par un traitement par une solution aqueuse d'acide chlorhydrique HCl de la manière décrite dans l'exemple 4. Le taux d'attaque résultant représente 3,5% en poids de la masse de l'alliage.

La matière active est obtenue en précipitant de l'hydroxyde de nickel Ni(OH)₂ sur cet alliage hydrurable désoxydé pulvérulent. La couche externe d'hydroxyde de nickel ainsi formée représente 4% de la masse d'alliage. Le dépôt de la couche d'hydroxyde s'effectue de la manière décrite dans exemple 1 à l'exception du fait que l'on utilise 114,7 ml d'une solution de sulfate de nickel NiSO₄.6H₂O à 150 g/l.

### EXEMPLE 7

A titre comparatif, on utilise comme matière active X un alliage hydrurable qui appartient à la famille des AB₅ de composition La_{0.3}Ce_{0.5}Nd_{0.15}Pr_{0.05}Ni_{3.55}Mn_{0.4}Al_{0.3}Co_{0.75}.

### EXEMPLE 8

A titre comparatif, on fabrique une matière active Y à partir de l'alliage hydrurable de l'exemple 7. La matière active Y est obtenue en éliminant la couche superficielle d'oxyde par un traitement par une solution aqueuse d'acide chlorhydrique HCI de la manière décrite dans l'exemple 4. Le taux d'attaque résultant représente 3,5% en poids de la masse de l'alliage.

A partir des matières actives A à F selon l'invention et des matières actives comparatives X et Y, on fabrique des générateurs électrochimiques secondaires étanches de type nickel-métal hydrurable Ni-MH, de format AA et de capacité nominale C = 1200 mAh, de la manière suivante.

L'électrode négative est réalisée avec une pâte ayant comme composition pondérale (exprimée en % par rapport au poids de la pâte) :

| | |
|---|---|
| Matière électrochimiquement active : | 80,0% |
| Liant : élastomère styrène / butadiène (SBR) | 0,5% |
| Conducteur : carbone | 0,3% |
| Epaississant : hydroxypropylméthylcellulose (HPMC) | 0,2% |
| Eau : | 19,0% |

La viscosité de la pâte est ajustée avec de l'eau. La pâte est introduite dans le support conducteur qui est une mousse de nickel. L'ensemble est ensuite séché afin d'en éliminer l'eau, puis laminé à une porosité de 25% pour obtenir l'électrode.

L'électrode positive de type connu a comme matière électrochimiquement active un hydroxyde à base de nickel. Le support conducteur de l'électrode positive servant de collecteur de courant est une mousse de nickel. La capacité de l'électrode négative est supérieure à celle de l'électrode positive.

Un faisceau électrochimique est constitué de l'électrode positive précédemment décrite accolée à l'électrode négative précédemment décrite dont elle est isolée par un séparateur constitué d'un non-tissé de polypropylène. Le faisceau spiralé est inséré dans un godet métallique et imprégné d'un électrolyte alcalin qui est une solution alcaline aqueuse constituée d'un mélange d'hydroxyde de potassium KOH 7,4N, d'hydroxyde de lithium LiOH 0,5N et d'hydroxyde de sodium NaOH 0,4N.

Une évaluation des performances à froid des générateurs électrochimiques, indicatrices de l'état d'activation de l'alliage, est effectuée dans les conditions suivantes :
- Cycles 1 et 2 :: charge à 0,1 Ic pendant 16 heures à 20°C où Ic est le courant nécessaire pour décharger la capacité nominale C d'un accumulateur en 1 heure, puis décharge à 0,2 Ic jusqu'à une tension d'arrêt de 1 Volt.
- Cycle 3 :: charge à Ic pendant 1,1 heure à 20°C, puis décharge à Ic à 20°C jusqu'à une tension d'arrêt de 0,9 Volt.
- Cycle 4 :: charge à Ic pendant 1,1 heure à 20°C, stabilisation à -10°C pendant 3 heures, puis décharge à Ic jusqu'à une tension d'arrêt de 0,8 Volt.

Une évaluation de la corrosion de l'alliage de l'électrode négative est réalisée après 4 cycles et après 600 cycles par dosage par ICP de la quantité d'aluminium Al dissoute dans l'électrolyte, puis piégée par l'électrode positive. En effet l'aluminium provenant de l'électrode négative vient en totalité s'insérer dans l'électrode positive. En rapportant la quantité d'aluminium de l'électrode positive à la quantité initiale d'aluminium contenue dans l'alliage de l'électrode négative, il est possible de calculer la corrosion de l'accumulateur. On a rassemblé dans le tableau ci-dessous les résultats :
- quantité d'hydroxyde précipité en % en poids par rapport à l'alliage initial,
- capacité initiale Ci en Ah à Ic à 20°C (cycle 3),
- rapport en % de la capacité déchargée à froid Cd en Ah à Ic à -10°C (cycle 4) à la capacité initiale Ci,
- taux de corrosion T₄ en % après 4 cycles,
- taux de corrosion T₆₀₀ en % après 600 cycles.

**TABLEAU**

| Matière active | A | B | C | D | E | F | X | Y |
|---|---|---|---|---|---|---|---|---|
| Traitement | NaOH | NaOH | NaOH | HCI + NaOH | HCI + NaOH | HCI + NaOH | - | HCI |
| Ni(OH)₂ (%) | 1 | 3 | 6 | 0.5 | 2 | 4 | 0 | 0 |
| Ci (Ah) | 1.260 | 1.255 | 1.245 | 1.280 | 1.275 | 1.270 | 1.275 | 1.284 |
| Cd/Ci(%) | 50 | 45 | 30 | 90 | 70 | 40 | 55 | 90 |
| T₄ (%) | 2.5 | 1.5 | 1 | 5.5 | 3 | 2 | 2.5 | 6 |
| T₆₀₀ (%) | 12.5 | 11.5 | 10.8 | 15.5 | 13 | 12 | 12.5 | 16 |

Ces résultats confirment que la capacité initiale Ci de l'alliage hydrurable et ses performances en décharge à basse température sont améliorées par un traitement acide (X vs Y), mais le taux de corrosion augmente sensiblement.

Lorsque le traitement acide est suivi d'un traitement alcalin selon la présente invention, les taux de corrosion sont moins élevés (D, E, F vs Y), ce qui est particulièrement visible après 600 cycles. On obtient les taux de corrosion les plus bas en l'absence de traitement acide avant le traitement alcalin selon l'invention (A, B, C, vs D, E, F).

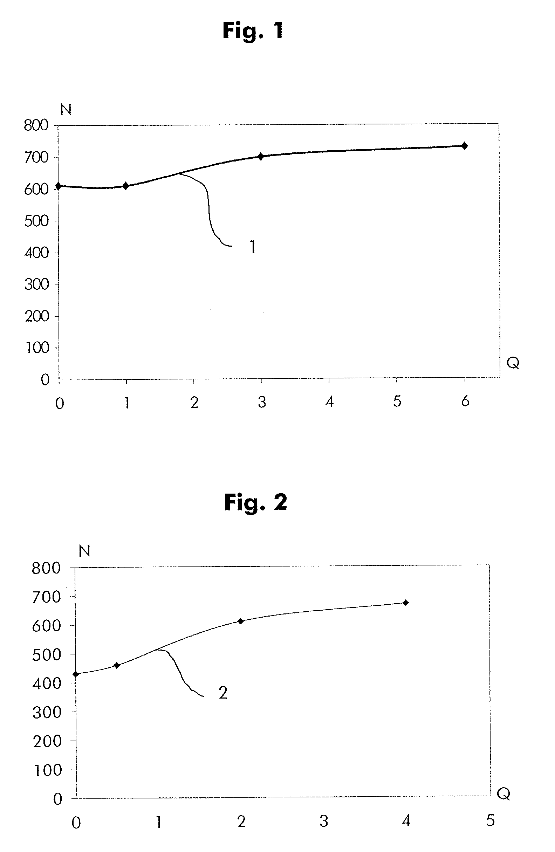

Une évaluation de la durée de vie en cyclage rapide des générateurs électrochimiques est réalisée dans les conditions suivantes à partir du cycle 5 : charge à Ic pendant 1,1 heure à 20°C, puis décharge à Ic jusqu'à une tension d'arrêt de 0.9 Volt. Le critère de fin de vie choisi est le taux de corrosion critique. Au-delà du taux de corrosion critique, la consommation d'eau est accentuée par la perte d'hydrogène et par conséquent l'assèchement du séparateur est accéléré. Le taux de corrosion critique est défini comme l'absence d'excédent de capacité négative, ce qui contribue à une montée très rapide de la vitesse corrosion et par conséquent de l'impédance. L'excédent de capacité négative est déterminé par le surdimensionnement de la capacité de l'électrode négative par rapport à celle de l'électrode positive. Ceci est nécessaire pour éviter le dégagement gazeux d'hydrogène H₂ à l'électrode négative lors de la surcharge. Le phénomène de corrosion conduit à la consommation de l'excédent de capacité de l'électrode négative par la formation d'hydrures et d'hydroxydes. Les résultats sont montrés sur les figures 1 et 2.

La courbe 1 de la figure 1 représente la durée de vie d'un générateur électrochimique en fonction de la quantité d'hydroxyde de nickel Ni(OH)₂ déposé à la surface de l'alliage hydrurable dans le cas où l'électrode négative contient une matière active n'ayant pas subi de traitement acide (matières actives X, A, B et C). On observe que la durée de vie passe de 600 cycles pour une matière active constituée d'un alliage hydrurable non traité (X) à plus de 700 cycles pour une matière active selon l'invention (C).

La courbe 2 de la figure 2 représente la durée de vie d'un générateur électrochimique en fonction de la quantité d'hydroxyde de nickel Ni(OH)₂ déposé à la surface de l'alliage hydrurable dans le cas où l'électrode négative contient une matière active ayant subi un traitement acide (matières actives Y, D, E et F). Dans ce cas où la couche d'oxyde recouvrant initialement la surface de l'alliage hydrurable a été éliminée, on constate que la durée de vie passe de 400 cycles pour une matière active constituée d'un alliage hydrurable ayant subi un traitement acide (Y) à près de 700 cycles pour une matière active selon l'invention (F).

La diminution du taux de corrosion a donc comme conséquence une nette augmentation du nombre de cycles pour des matières actives analogues. La réduction de la corrosion est proportionnelle à la quantité d'hydroxyde de nickel déposé sur l'alliage. La matière active selon l'invention présentant simultanément la capacité la plus élevée à basse température, un faible taux de corrosion et une longue durée de vie est la matière active B n'ayant pas subi de traitement acide préalable et comprenant 3% en poids de Ni(OH)₂.

Bien entendu, la présente invention n'est pas limitée aux modes de réalisation décrits, mais elle est susceptible de nombreuses variantes accessibles à l'homme de l'art sans que l'on s'écarte de l'esprit de l'invention. En particulier, on pourra sans sortir du cadre de l'invention utiliser d'autre composition d'alliage hydrurable et modifier la composition de l'hydroxyde à base de nickel et la nature des éléments dopants. On pourra également envisager l'utilisation d'un support conducteur d'électrode de nature et de structure différente. Enfin, les différents ingrédients entrant dans la réalisation de la pâte, ainsi que leurs proportions relatives, pourront être changés. Notamment des additifs destinés à faciliter la mise en forme de l'électrode, comme un épaississant ou un stabilisateur de texture, pourront y être incorporés dans des proportions mineures.

## Revendications

1. Matière électrochimiquement active comprenant un alliage hydrurable dont la surface est recouverte d'une couche protectrice, **caractérisée en ce que** ladite couche est constituée principalement d'un hydroxyde de nickel.

2. Matière active selon la revendication 1, dans laquelle ladite couche est constituée d'au moins 80% en poids d'hydroxyde de nickel.

3. Matière active selon l'une des revendications 1 et 2, dans laquelle ladite couche comporte jusqu'à 20% en poids d'au moins un autre métal.

4. Matière active selon la revendication 3, dans laquelle ledit métal est choisi parmi Mn, Al, Co, Cr, Fe et Cu.

5. Matière active selon l'une des revendications précédentes, dans laquelle ladite couche représente de 1% à 4% en poids de l'alliage hydrurable.

6. Matière active selon la revendication 5, dans laquelle ladite couche représente de 2 à 4% en poids de l'alliage hydrurable.

7. Matière active selon la revendication 5, dans laquelle ladite couche représente de 1 à 3% en poids de l'alliage hydrurable après élimination de la couche d'oxyde.

8. Matière active selon l'une des revendications précédentes, dans laquelle ledit alliage hydrurable est choisi parmi les alliages hydrurable de type AB₅ dans lequel A représente un mischmetal et B représente au moins un élément choisi parmi Ni, Mn, Al, Co, Cr, Fe, Cu, B, Si, S, Cr, Ga, Ge, Mo, Ru, Rh, Pd, Ag, In, Sn, Sb, Bi, P, V, Nb, Ta et W.

9. Electrode négative de générateur électrochimique secondaire à électrolyte alcalin contenant une matière électrochimiquement active selon l'une des revendications 1 à 8.

10. Electrode selon la revendication 9, comprenant un support conducteur et une couche contenant la matière active et un liant dans laquelle ledit liant est choisi parmi un copolymère styrène / butadiène et un copolymère styrène / acrylate.

11. Générateur électrochimique secondaire comportant une électrode négative contenant une matière électrochimiquement active selon l'une des revendications 1 à 8.

12. Générateur selon la revendication 11, comportant en outre une électrode positive dont la matière électrochimiquement active est un hydroxyde à base de nickel, un séparateur polymère et un électrolyte aqueux alcalin.

13. Procédé de fabrication d'une matière électrochimiquement active selon l'une des revendications 1 à 8, comprenant les étapes suivantes :
- on met en suspension de la poudre d'alliage hydrurable dans l'eau,
- on ajoute à ladite suspension une solution aqueuse d'un sel de nickel,
- puis on ajoute une solution alcaline de manière à amener le pH à une valeur au moins égale à 7,
- on laisse ladite poudre au contact de ladite solution alcaline,
- on sépare, on lave et on sèche ladite poudre de matière active obtenue.

14. Procédé selon la revendication 13, dans lequel la température de traitement en présence de ladite solution alcaline est inférieure à 100°C.

15. Procédé selon la revendication 14, dans lequel ladite température de traitement est inférieure à 40°C.

16. Procédé selon l'une des revendications 13 à 15, dans lequel ledit sel de nickel est un sel de nickel (II).

17. Procédé selon la revendication 16, dans lequel ledit sel de nickel est choisi parmi un acétate, un sulfate, un nitrate ou un chlorure de nickel.

18. Procédé selon l'une des revendications 13 à 17, dans lequel ladite solution alcaline est choisie parmi une solution de soude NaOH, de lithine LiOH ou de potasse KOH.

19. Procédé selon l'une des revendications 13 à 18, dans lequel ladite poudre est laissée en contact avec ladite solution alcaline pendant une durée qui ne dépasse pas 24 heures.

20. Procédé de fabrication d'une matière électrochimiquement active selon l'une des revendications 1 à 8, comprenant les étapes suivantes :
- on met en suspension de la poudre d'alliage hydrurable dans une solution aqueuse acide afin d'éliminer la couche d'oxyde,
- on filtre, on lave et on met en suspension dans l'eau la poudre d'alliage hydrurable désoxydée
- on ajoute à la suspension une solution aqueuse d'un sel de nickel,
- puis on ajoute une solution alcaline de manière à amener le pH à une valeur au moins égale à 7,
- on laisse la poudre au contact de la solution alcaline,
- on sépare, on lave et on sèche la poudre de matière active obtenue.

21. Procédé selon la revendication 20, dans lequel la température de traitement en présence de ladite solution acide est inférieure à 40°C.

22. Procédé selon l'une des revendications 20 et 21, dans lequel ladite solution acide est une solution d'acide chlorhydrique HCI.

23. Procédé selon l'une des revendications 20 à 22, dans lequel ladite solution acide a un pH compris entre 0 et 3.
